**Europäisches Patentamt**

**European Patent Office**

**Office européen des brevets**

(19)

(11) Veröffentlichungsnummer: **0 089 588**
**A2**

(12) # EUROPÄISCHE PATENTANMELDUNG

(21) Anmeldenummer: **83102455.9**

(22) Anmeldetag: **12.03.83**

(51) Int. Cl.³: **A 01 N 25/14**

(30) Priorität: **24.03.82 DE 3210757**

(43) Veröffentlichungstag der Anmeldung:
**28.09.83 Patentblatt 83/39**

(84) Benannte Vertragsstaaten:
**AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Sommer, Karl, Dr.**
**Am Fischerberg 8**
**D-8051 Palzing(DE)**

(72) Erfinder: **Heinz, Robert**
**Heilbronner Strasse 12**
**D-6800 Mannheim 51(DE)**

(72) Erfinder: **Koob, Knut, Dr.**
**Lorscher Strasse 7**
**D-6704 Mutterstadt(DE)**

(72) Erfinder: **Weber, Gerhard**
**Luitpoldstrasse 20**
**D-6737 Boehl-Iggelheim(DE)**

(72) Erfinder: **Kraft, Helmut**
**Hirtenweg 131**
**D-6719 Wattenheim(DE)**

(54) Verfahren zur Herstellung von staubarmen leicht dispergierbaren Pflanzenschutzmitteln.

(57) Feste, staubarme, in Wasser leicht lösliche bzw. dispergierbare Pflanzenschutzmittel werden durch Vermahlen mit einem Quellmittel und Granulieren erhalten.

EP 0 089 588 A2

Croydon Printing Company Ltd.

Verfahren zur Herstellung von staubarmen leicht dispergierbaren Pflanzenschutzmitteln

Die Erfindung betrifft feste, in Wasser leicht lösliche bzw. dispergierbare Pflanzenschutzmittel in Form von Granulaten.

Zur Herstellung von Spritzbrühen vorgesehene Pflanzenschutzmittel werden vielfach als sog. "wettable powder" (WP), also mit Wasser dispergierbare Pulver angeboten. Das Pulver wird vom Anwender in Wasser eingerührt, wobei vielfach ein vorheriges Anteigen verlangt wird, um die Bildung von Klumpen zu verhindern. Da wegen der geforderten Dispergierbarkeit und Schwebefähigkeit solche Pulver sehr feinteilig sein müssen (Teilchengröße um 5 $\mu$m) führt die Anwendung ("handling") meist zu unangenehmem Staubanfall. Außerdem werden die Behälter oft nur unvollständig geleert. Die feinen Pulver lassen sich zudem nur schlecht dosieren.

Pflanzenschutzmittel werden deshalb häufig auch in flüssiger Form ("flowable") angeboten; es handelt sich dabei um vordispergierte, hochkonzentrierte Suspensionen, die mit Wasser verdünnt werden können.

Flüssige Zubereitungen lassen sich zwar leichter zu Spritzbrühen verarbeiten, bringen jedoch Entsorgungsprobleme der Verpackung (Kanister, Flaschen) und bei langen Lagerzeiten Absetzprobleme.

Gute Handlingeigenschaften (staubarm, leichte Verpackung, gute Dosierbarkeit) haben auch staubarme, rieselfähige Granulate, sofern sie sich hinreichend schnell dispergieren lassen und eine ausreichende Schwebefähigkeit besitzen.

Es wurde nun gefunden, daß man ein rasch zerfallendes Pflanzenschutzgranulat erhält, wenn man in das Granulat als Hilfsstoff einen feingemahlenen quellbaren Abstandshalter einarbeitet, was an sich von pharmazeutischen Zubereitungen bekannt ist. Der mit Wasser quellbare Hilfsstoff soll unter starker Volumenvergrößerung Wasser aufnehmen. Damit ist die Funktion des Hilfsstoffes klar ersichtlich: Die Agglomerate, die aus einer Mischung staubfeiner Mikropartikeln der aktiven Substanz und des Hilfsstoffes bestehen, werden unter Einwirkung des Wassers auseinander gerissen. Der feingemahlene Hilfsstoff bewirkt somit eine sofortige Dispergierung und hohe Schwebefähigkeit. Vorzugsweise wird als Abstandshalter vernetztes Polyvinylpyrrolidon oder ein Polysaccharid, besonders aufgeschlossene Stärke, verwendet.

Mu/St

Vernetztes Polyvinylpyrrolidon (PVP) ist ein in Wasser, in starken Mineralsäuren, in alkalischen Lösungen und üblichen organischen Lösungsmitteln unlösliches Polymerisat des N-Vinylpyrrolidons, jedoch benetzbar durch und quellbar in Wasser. Vernetztes PVP muß vom unvernetzten unterschieden werden, das wasserlöslich ist und für den erfindungsgemäßen Zweck weniger geeignet.

Es zeigte sich, daß eine besonders gute Schwebefähigkeit des dispergierten Mittels erreicht wird, wenn vor dem Granulieren das Gemisch aus Abstandshalter und Pflanzenschutzmittel gemeinsam auf eine mittlere Korngröße von z.B. unter 5 $\mu$m vermahlen wurde. Als Mahlorgan ist z.B. eine Strahlmühle geeignet.

Die Menge des Quellmittels kann, bezogen auf das Gesamtgemisch, z.B. 0,5 bis 20 Gew.% betragen. In einigen Fällen kommt man mit einer geringeren Menge aus; im allgemeinen ist eine höhere Menge lediglich vom wirtschaftlichen, nicht vom technischen Standpunkt aus überflüssig.

Zusätzlich zu dem erfindungsgemäßen Quellmittel können andere, in die gleiche Richtung wirkende Mittel verwendet werden; z.B. kann man ohne Verlust an Dispergierbarkeit und Schwebefähigkeit PVP zum Teil durch das billigere Pentanatriumtriphosphat ersetzen. Pentanatriumtriphosphat wird im Waschpulver als Schmutzlöser eingesetzt und ist somit ebenfalls ein handelsübliches Großprodukt.

In manchen Fällen kommt es auf die Art und Weise der Granulierung an, wenn man eine gute Wirkung (Dispergierbarkeit) erzielen will. Z.B hat sich gezeigt, daß Chloridazon in Verbindung mit PVP bei der Granulation mit Wasser keine günstigen Produkte bildet. Als geeignetes Granuliergerät hat sich dagegen die Walzenpresse erwiesen. Das gemischte und/oder gemeinsam strahlgemahlene Produkt wird mittels einer Stopfschnecke trocken in den Spalt zweier sich drehender Walzen gefördert und zwischen den Walzen verpreßt. Das entstehende Band (die Schülpe) wird auf einem groben Zerkleinerer gebrochen und z.B. auf einem Siebzerkleinerer auf eine bestimmte Korngröße (z.B. 3 mm) begrenzt. Aus der entstehenden breiten Agglomeratgrößenverteilung wird mittels Sieb oder Sichter das entstandene Feingut abgetrennt und der Walzenpresse wieder zugeführt.

Die vorstehend erwähnten Techniken sind dem einschlägig Tätigen weitgehend bekannt. Entsprechende Darstellungen sind jedoch z.B. der Zeitschrift Verfahrenstechnik 5, 225 (1971) für Strahlmühlen und der Zeitschrift Aufbereitungstechnik 1970, Nr. 3, S. 128 für Kompaktiereinrichtungen zu entnehmen.

Für die Zwecke der Herstellung gut handhabbarer Pflanzenschutzmittel ist in vielen Fällen eine Korn(Agglomerat-)größenverteilung geeignet, deren Hauptmenge zwischen etwa 0,5 und 1,5 mm liegt. Diese Größe hängt aber auch z.B. von der praktisch beobachteten Zerfallgeschwindigkeit der Mittel ab. In manchen Fällen, z.B. für Zwecke des Kleinverbrauchs, ist auch die Herstellung größerer Einheiten, z.B. Tabletten bestimmten Gewichts möglich.

Beispiel

1000 g in handelsüblicher Weise formuliertes Chloridazon und 100 g handelsübliches, unter dem Handelsnamen Divergan F erhältliches, vernetztes Polyvinylpyrrolidon wurden in einem 5 Liter fassenden Pflugscharmischer bei einer Drehzahl von 300 [1/min] während 10 Minuten bearbeitet und das Gemisch dann in einer Laborstrahlmühle von 170 mm Durchmesser unter einem Mahldruck von 8 bar zerkleinert. Korngrößenanalyse ergab einen Gewichtsmittelwert ($X_{50}$) des Durchmessers von etwa 5 µm.

Das Pulver wurde auf einer Laborwalzenpresse (Typ WP50 der Fa. Alexanderwerk) bei einer Walzendrehzahl von 7, einer Schneckendrehzahl von 50 [1/min] und einem Druck von 25 bar zu einer Schülpe verarbeitet, die dann über Vorbrecher und Siebzerkleinerer auf eine maximale Korngröße von 2 mm gebracht wurde. Mittels eines Taumelsiebes wurde Feingut < 0,5 mm abgetrennt. Der Rückstand ließ sich mit Wasser einwandfrei zu einer Spritzbrühe verarbeiten und hat folgende Eigenschaften

| | |
|---|---|
| Schwebefähigkeit | 80 % |
| Siebrückstand | 0,1 % |
| Staubwert n. Cassella | 8/3 |
| Abrieb (Kugelmühlentest) | 7-9 %. |

BASF Aktiengesellschaft — 4 — o.z. 0089588

## Patentansprüche

1. Feste, in Wasser lösliche und/oder dispergierbare Pflanzenschutzmittel zur Herstellung einer Spritzbrühe, enthaltend bis zu 99,9 Gew.% wenigstens eines festen, feinteiligen Pflanzenschutzmittels und eine wirksame Menge von bis zu etwa 20 Gew.% wenigstens eines mit Wasser quellbaren Hilfsstoffs als Abstandshalter, sowie gegebenenfalls weiterer, insbesondere üblicher Hilfsstoffe.

2. Pflanzenschutzmittel nach Anspruch 1, enthaltend als quellbaren Hilfsstoff vernetztes Polyvinylpyrrolidon oder ein Polysaccharid.

3. Pflanzenschutzmittel nach Anspruch 2, dadurch gekennzeichnet, daß es zusätzlich Pentanatriumtriphosphat enthält.

4. Verfahren zur Herstellung von Pflanzenschutzmitteln nach einem der Ansprüche 1 bis 3, dadurch gekennzeichnet, daß man das Pflanzenschutzmittel, den mit Wasser quellbaren Hilfsstoff und gegebenenfalls weitere Bestandteile durch Kompaktieren vermischt, die kompaktierte Masse zerkleinert und eine Korngrößenverteilung zwischen vorzugsweise 0,5 und 1,5 mm in an sich bekannter Weise durch Klassieren gewinnt.

5. Verfahren gemäß Anspruch 4, dadurch gekennzeichnet, daß man Pflanzenschutzmittel, Hilfsmittel und gegebenenfalls weitere Hilfsstoffe gemeinsam vermahlt.

6. Verfahren nach Anspruch 5, dadurch gekennzeichnet, daß man als Mühle eine Strahlmühle verwendet.

7. Verfahren gemäß Anspruch 5 oder 6, dadurch gekennzeichnet, daß man das vorvermahlene Gemisch auf einer Walzenpresse granuliert.

8. Pflanzenschutzgranulate nach einem der Ansprüche 1 bis 3, dadurch gekennzeichnet, daß sie als Pflanzenschutzmittel mindestens ein Insektizid, Fungizid oder Herbizid enthalten.